# EUROPÄISCHE PATENTSCHRIFT

(11) **EP 2 632 673 B1**
(45) Veröffentlichungstag und Bekanntmachung des Hinweises auf die Patenterteilung: **18.06.2014**
(21) Anmeldenummer: 10778855.6
(22) Anmeldetag: 26.10.2010
(51) Int. Cl.: B29C 43/02, B29C 33/20

(54) **VERFAHREN UND VORRICHTUNG ZUM HERSTELLEN EINES LINSENWAFERS**
METHOD AND DEVICE FOR PRODUCING A LENS WAFER
PROCÉDÉ ET DISPOSITIF POUR FABRIQUER UNE PASTILLE DE LENTILLE

(43) Veröffentlichungstag der Anmeldung: 04.09.2013
(73) Patentinhaber: EV Group GmbH, 4782 St. Florian am Inn (AT)
(72) Erfinder: KAST, Michael, A-4600 Wels (AT); WIMPLINGER, Markus, A-4910 Ried im Innkreis (AT)
(74) Vertreter: Schweiger, Johannes
(86) Internationale Anmeldenummer: PCT/EP2010/006518
(87) Internationale Veröffentlichungsnummer: WO 2012/055424

(56) Entgegenhaltungen:
- WO-A1-2012/028163
- US-A1- 2004 090 571
- US-A1- 2005 088 751
- US-A1- 2010 208 354
- US-B1- 6 363 603

## Beschreibung

Die vorliegende Erfindung betrifft ein Verfahren und eine Vorrichtung zum Herstellen, insbesondere Prägen, eines eine Vielzahl von Mikrolinsen aufweisenden Linsenwafers gemäß den Patentansprüchen 1 und 8.

Mikrolinsen finden in erster Linie Anwendung für Geräte, die eine optische Fokusiereinrichtung benötigen, wie beispielsweise Kameras von Mobiltelefonen. Auf Grund des Miniaturisierungsdrucks sollen die funktionalen Bereiche immer kleiner werden. Je weiter die Mikrolinsen miniaturisiert werden sollen, desto schwieriger wird deren optisch korrekte Herstellung, weil gleichzeitig ein enormer Kostendruck für die idealerweise in Massenfertigung herzustellenden Mikrolinsen besteht. Im Stand der Technik werden Mikrolinsen auf einem Trägersubstrat durch unterschiedliche Herstellverfahren erzeugt, wie beispielsweise in der US 6,846,137 B1, US 5,324,623, US 5,853,960 und US 5,871,888 gezeigt. Allen vorgenannten Verfahren ist gemein, dass prinzipbedingt eine gewisse Dicke notwendig ist und das durch die Mikrolinse durchtretende Licht nicht nur die Linse, sondern das Trägersubstrat passieren muss. Auf Grund der gleichzeitig geforderten hohen Qualität und der Anforderungen an höhere Auflösung bei gleichzeitig höherer Brillanz, die unter anderem von der Dicke und der Anzahl der Optiken entlang der optischen Achse, also des Strahlengangs, abhängt, ist eine weitere Optimierung der Mikrolinsen gemäß dem Stand der Technik wünschenswert.

Die US 2010/0208354 D1 zeigt ein Verfahren und Vorrichtung zur Herstellung von Mikrolinsenarrays, gemäß den Oberbegriffen der Ansprüche 1 und 8.

Das größte Problem bei solchen Mikrolinsen mit Trägern ist die korrekte Ausrichtung des Prägestempels gegenüber dem Träger. Fehler bei der Ausrichtung potenzieren sich häufig noch dadurch, dass die mit Träger hergestellten Mikrolinsen meist gestapelt werden.

Besonders wichtig für eine korrekte optische Achse der Mikrolinse ist die Behebung eines Keilfehlers des Stempels gegenüber dem Träger, da bei Vorhandensein eines Keilfehlers beim Prägen die optische Achse nicht exakt senkrecht zum Träger geprägt werden kann.

Der vorliegenden Erfindung liegt die Aufgabe zugrunde, eine Vorrichtung beziehungsweise ein Verfahren anzugeben, mit welchen, insbesondere in Massenfertigung, Mikrolinsen mit Träger herstellbar sind, die eine hohe Fertigungsgenauigkeit, insbesondere eine exakt ausgerichtete optische Achse aufweisen.

Diese Aufgabe wird mit den Merkmalen der Ansprüche 1 und 8 gelöst. Vorteilhafte Weiterbildungen der Erfindung sind in den Unteransprüchen angegeben. In den Rahmen der Erfindung fallen auch sämtliche Kombinationen aus zumindest zwei von in der Beschreibung, den Ansprüchen und/oder den Figuren angegebenen Merkmalen. Bei angegebenen Wertebereichen sollen auch innerhalb der genannten Grenzen liegende Werte als Grenzwerte offenbart gelten und in beliebiger Kombination beanspruchbar sein.

Der Erfindung liegt der Gedanke zugrunde, den Träger, insbesondere Wafer, während des Prägens, insbesondere während der Formung des aushärtbaren Fluids gegenüber dem Prägestempel auszurichten. Auf diese Art und Weise wird eine in-situ-Ausrichtung ermöglicht. Dies hat weiterhin die positive Konsequenz, dass der Abstand D zwischen dem Stempel und dem Träger, insbesondere gegen Ende der Formung des Mikrolinsenfeldes, geringstmöglich ist. Hierdurch kann die Ausrichtung viel genauer als im Stand der Technik vorgenommen werden.

Folgende Verfahrensschritte sind erfindungsgemäß vorgesehen, insbesondere in der nachfolgend aufgeführten Reihenfolge:
- Aufbringung des Linsenmaterials, insbesondere eines aushärtbaren Fluids, vorzugsweise Polymers, in fluider Form auf eine Prägeseite des Wafers und/oder auf eine Linsenformen zum Prägen der Mikrolinsen aufweisende Prägeseite eines Stempels,
- Aufeinander-zu-Bewegung des im Wesentlichen parallel, nämlich in einer X-Y-Ebene, und gegenüberliegend zum Wafer angeordneten Stempels in einer senkrecht zur X-Y-Ebene verlaufenden Z-Richtung,
- Prägen des Linsenwafers durch Formung und anschließende Aushärtung des Linsenmaterials, wobei die Formung durch Aufeinander-zu-Bewegung der Stempel erfolgt.

Die Erfindung ist dadurch gekennzeichnet, dass ein Keilfehlerausgleich durch Keilfehlerausgleichsmittel zur parallelen Ausrichtung der Prägeseiten und/oder eine X-Y-Ausrichtung des Stempels mit dem Wafer während der Formung erfolgen. Die X-Y-Ausrichtung bedeutet eine Ausrichtung (alignment) in der X-Y-Ebene, schließt also insbesondere Rotation in der X-Y-Ebene ein.

Besonders wichtig für die Qualität der durch das erfindungsgemäße Verfahren hergestellten Mikrolinsen ist der Keilfehlerausgleich, da durch den Keilfehlerausgleich gemäß der vorliegenden Erfindung eine viel exaktere und reproduzierbare, genau senkrechte Lage der optischen Achse der Mikrolinse ermöglicht wird.

Gemäß einer vorteilhaften Ausführungsform der Erfindung ist vorgesehen, dass der Keilfehlerausgleich oder die X-Y-Ausrichtung nach Unterschreiten eines bestimmten Wertes eines Abstands D der Prägeseite des Wafers und der Prägeseite des Stempels, insbesondere laufend, erfolgen. Denn erfindungsgemäß besonders vorteilhaft ist es, die Ausrichtung kurz vor dem Prägen beziehungsweise Aushärten des Linsenwafers durchzuführen, da zu diesem Zeitpunkt ein geringstmöglicher Abstand D zwischen den Prägeseiten vorliegt, so dass, insbesondere mit einer zu den Prägeseiten starren Positionserfassungseinrichtung, eine extrem genaue Erfassung der Position der Prägeseiten und damit der Position des Wafers und dem Stempels ermöglicht wird. Durch die Erfassung der Position des Wafers und des Stempels beziehungsweise der jeweiligen Prägeseiten zueinander ist eine exakte Steuerung der Keilfehlerausgleichsmittel sowie der X-Y-Ausrichtung durch X-Y-Ausrichtungsmittel möglich.

Entsprechend ist es von besonderem Vorteil, wenn die Formung gemäß einer Ausführungsform der Erfindung positionsgeregelt erfolgt.

Soweit zum Keilfehlerausgleich und/oder zur X-Y-Ausrichtung im Stempel, insbesondere an dessen Prägeseite, vorzugsweise zumindest an einem Umfangsrand des Stempels, und im Wafer, insbesondere an dessen Prägeseite, vorzugsweise zumindest an einem Umfangsrand des Wafers, jeweils korrespondierende Ausrichtungsmarken vorgesehen sind, ist eine noch exaktere Erfassung der Position der Prägeseiten realisierbar und durch die Anordnung der Positionsmarken an den Prägeseiten, insbesondere bündig in die Prägeseiten integriert, ist der Abstand zwischen den Positionsmarken geringstmöglich. Hierdurch wird die Genauigkeit der Positionserfassung deutlich erhöht.

Gemäß einer weiteren vorteilhaften Ausführungsform der Erfindung ist vorgesehen, dass der Keilfehlerausgleich und/oder X-Y-Ausrichtung erfolgen, nachdem sowohl die Prägeseite des Stempels als auch die Prägeseite des Wafers zumindest teilweise, vorzugsweise überwiegend, von dem Fluid bedeckt sind. Besonders vorteilhaft ist es dabei, wenn das Fluid transparent für elektromagnetische Strahlen, insbesondere für Licht, ist, so dass während der Ausrichtung die Positionserfassung durch das Fluid hindurch erfolgt. Dies wird nachfolgend als In-Liquid-Ausrichtung bezeichnet und durch diese Maßnahme ergibt sich ein, insbesondere um den Brechungsindex des Fluids als Multiplikator, vergrößerter Schärfentiefebereich von erfindungsgemäß vorgesehenen Positionserfassungsmitteln, insbesondere Optiken zur Erfassung der Position der Positionsmarken beziehungsweise der Prägeseiten des Wafers und des Stempels.

Als Konsequenz ist es von besonderem Vorteil, wenn zum Keilfehlerausgleich und/oder zur X-Y-Ausrichtung optische Positionserfassungsmittel, insbesondere Optiken, vorgesehen sind, wobei während des Keilfehlerausgleichs und/oder der X-Y-Ausrichtung sowohl die Prägeseite des Stempels oder deren Ausrichtungsmarken als auch die Prägeseite des Wafers oder deren Ausrichtungsmarken, insbesondere gleichzeitig, im Schärfentiefebereich der, insbesondere zum Wafer starren, optischen Positionserfassungsmittel angeordnet sind. Erfindungsgemäß ist es daher nicht mehr notwendig, die Positionserfassungsmittel während der Positionserfassung beziehungsweise während der Ausrichtung und der Formung zu verschieben, so dass die Positionserfassungsmittel selbst keinen Einfluss auf die Relativposition des Stempels zum Wafer haben und somit eine zusätzliche Fehlerquelle ausgeschlossen wird. Im Stand der Technik bestand das Problem, dass entweder ein starres Positionserfassungsmittel mit einem größeren Schärfentiefebereich oder ein bewegliches Positionserfassungsmittel mit einem kleineren Schärfentiefebereich eingesetzt werden mussten. Dieses Dilemma wird durch die vorliegende erfindungsgemäße Maßnahme behoben.

Indem der Abstand D zwischen der Prägeseite des Stempels und der Prägeseite des Wafers in Z-Richtung größer als 0 und gleichzeitig kleiner als der Schärfentiefebereich in Z-Richtung während der Positionserfassung ist, wird die Erfassungsgenauigkeit verbessert beziehungsweise erhöht.

Eine erfindungsgemäße Vorrichtung zur Herstellung eines eine Vielzahl von Mikrolinsen aufweisenden Linsenwafers weist folgende Merkmale auf:
- einen Stempel mit einer Prägeseite mit einer Linsenformen aufweisenden Prägestruktur,
- eine erste Aufnahmeeinrichtung zur Aufnahme des Stempels an einer von der Prägeseite abgewandten Aufnahmeseite,
- eine zweite Aufnahmeeinrichtung zur Aufnahme eines Wafers an dessen von seiner Prägeseite abgewandten Aufnahmeseite,
- Aufbringmittel zur Aufbringung eines aushärtbaren Fluids, insbesondere Polymers, in fluider Form auf die Prägeseite oder die Prägeseite,
- Keilfehlerausgleichsmittel und/oder X-Y-Ausrichtungsmittel,
- Prägemittel zum Prägen des Linsenwafers durch Formung und Aushärtung des aushärtbaren Fluids.

Die erfindungsgemäße Vorrichtung zeichnet sich dadurch aus, dass der Wafer während der Formung durch die Keilfehlerausgleichsmittel und/oder die X-Y-Ausgleichsmittel gegenüber dem Stempel ausrichtbar ist. Bisher war eine Ausrichtung des Wafers gegenüber dem Stempel, also ein Keilfehlerausgleich oder eine X-Y-Ausrichtung, nicht während der Formung des Linsenwafers möglich.

Die erfindungsgemäße Vorrichtung wird dadurch verbessert, dass zum Keilfehlerausgleich und/oder zur X-Y-Ausrichtung im Stempel, insbesondere an der Prägeseite, vorzugsweise zumindest an einen Umfangsrand des Stempels, Ausrichtungsmarken vorgesehen sind, die zu Ausrichtungsmarken des Wafers korrespondierend angeordnet sind.

Die Erfindung wird weiter dadurch verbessert, dass zum Keilfehlerausgleich und/oder zur X-Y-Ausrichtung optische Positionserfassungsmittel, insbesondere Optiken vorgesehen sind, wobei des Keilfehlerausgleichs und/oder der X-Y-Ausrichtung sowohl die Prägeseite des Stempels oder deren Ausrichtungsmarken als auf die Prägeseite oder deren Ausrichtungsmarken, insbesondere gleichzeitig, im Schärfentiefebereich der, insbesondere zum Wafer starren, optischen Positionserfassungsmittel anordenbar sind.

Weitere Vorteile, Merkmale und Einzelheiten der Erfindung ergeben sich aus der nachfolgenden Beschreibung bevorzugter Ausführungsbeispiele sowie anhand der Zeichnungen. Diese zeigen in:
- Fig. 1:: eine schematische, geschnittene Seitenansicht einer erfindungsgemäßen Vorrichtung zum Herstellen eines eine Vielzahl von Mikrolinsen aufweisenden Linsenwafers,
- Fig. 2a bis 2c:: eine schematische Darstellung eines erfindungsgemäßen Verfahrensablaufs zur Herstellung eines Linsenwafers,
- Fig. 3a bis 3c:: eine schematische Darstellung eines erfindungsgemäßen Verfahrensablaufs in einer weiteren Ausführungsform des erfindungsgemäßen Verfahrens und
- Fig. 4a bis 4c:: eine schematische Darstellung des Verfahrensablaufs gemäß Figuren 2a bis 2c mit einer weiteren Ausführungsform der erfindungsgemäßen Vorrichtung, nämlich eines geänderten Stempels.

In den Figuren sind Vorteile und Merkmale der Erfindung mit diese jeweils identifizierenden Bezugszeichen gemäß Ausführungsformen der Erfindung gekennzeichnet, wobei Bauteile beziehungsweise Merkmale mit gleicher oder gleich wirkender Funktion mit identischen Bezugszeichen gekennzeichnet sind.

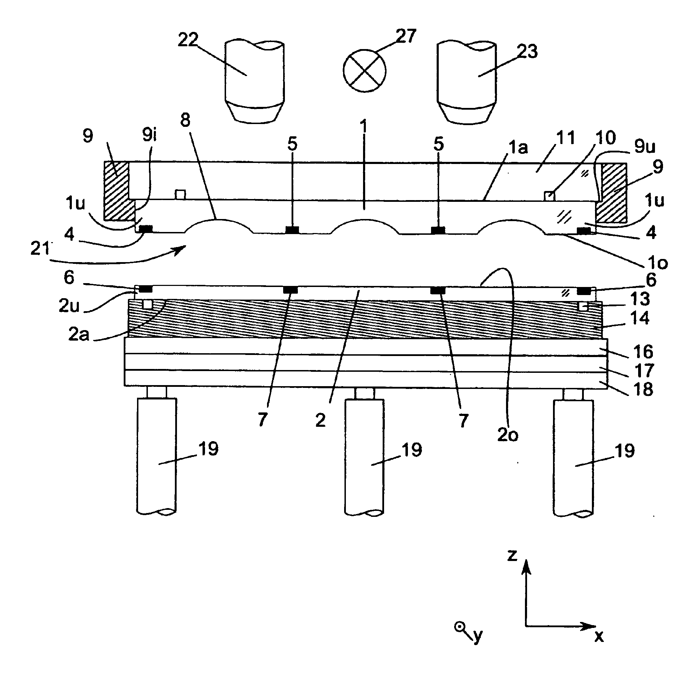

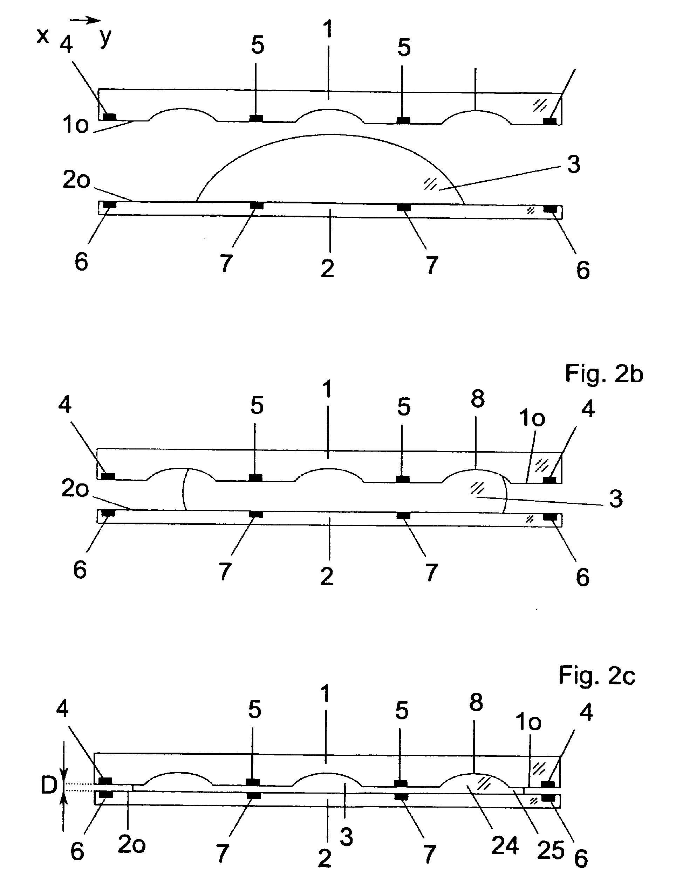

In der Figur 1 ist eine erfindungsgemäße Vorrichtung zur Herstellung einer eine Vielzahl von Mikrolinsen 24 (siehe Figuren 2c, 3c und 4c) aufweisenden Linsenmatrix 25 dargestellt.

Zum Prägen der Linsenmatrix 25 auf einen, insbesondere planen, Wafer 2 ist ein Stempel 1 mit einer Prägeseite 1o mit einer Linsenformen 8 aufweisenden Prägestruktur 21 in einer ersten Aufnahmeeinrichtung aufnehmbar. Die erste Aufnahmeeinrichtung besteht aus einer, insbesondere innenseitig, -ringförmigen Halterung 9, auf deren zum Ringinneren gerichteten Umfangsschulter 9u eine mit Ansaugbahnen 10 versehene Aufnahme 11 einsetzbar und fixierbar ist. An der Aufnahme 11 ist wiederum über die Ansaugbahnen 10 der Stempel 1 an seiner zur Prägeseite 1o abgewandten Aufnahmeseite 1a fixierbar. Zusätzlich wird der Stempel 1 an seinem Umfangsrand 1u durch eine innere Ringwand 9i der Halterung 9 gestützt.

Die erste Aufnahmeeinrichtung ist in der Vorrichtung starr, insbesondere an einem nicht dargestellten Gestell, angeordnet und oberhalb der Aufnahmeeinrichtung sind optische Positionserfassungsmittel in Form von Mikroskopen 22, 23 angeordnet, die zumindest in einer einer Prägerichtung entsprechenden Z-Richtung gegenüber der Aufnahmeeinrichtung beziehungsweise dem Stempel 1 fixierbar beziehungsweise fixiert sind. Die Z-Richtung beziehungsweise Prägerichtung ist orthogonal zu einer X-Y-Ebene beziehungsweise zu einer die X-Y-Ebene aufspannenden X-Richtung und Y-Richtung. Exakt orthogonal zur Z-Richtung und damit parallel zur Prägeseite 1o des Stempels 1, also zur X-Y-Ebene, ist ein Wafer 2 mit seiner Prägeseite 2o gegenüberliegend zur Prägeseite 1o erfindungsgemäß anordnenbar, und zwar zum Zeitpunkt des Prägens der Linsenmatrix 25 auf den Wafer 2. Die Linsenmatrix 25 und der Wafer 2 bilden gemeinsam einen Linsenwafer.

Der Wafer 2 ist auf einer beweglichen, zweiten Aufnahmeeinrichtung fixierbar. Die bewegliche Aufnahmeeinrichtung besteht aus Aktoren 19, die in Z-Richtung wirkend ausgerichtet sind. Als Aktoren 19 kommen beispielsweise Spindeln in Frage. Die Aktoren 19 sind jeweils einzeln durch die eine Steuereinrichtung steuerbar. Auf den Aktoren 19 ist ein X-Antrieb 18 und ein Y-Antrieb 17 angeordnet. Mit dem X-Antrieb 18 ist eine durch die Steuereinrichtung gesteuerte Bewegung des Wafers 2 in X-Richtung möglich, während der Y-Antrieb 17 eine Bewegung des Wafers 2 in Y-Richtung bewirken kann.

Weiterhin ist eine Rotationseinrichtung 16 zwischen den Aktoren 19 und dem Wafer 2 vorgesehen, mit der eine um eine in Z-Richtung verlaufende Rotationsachse rotierende Rotationsbewegung durch die Steuereinrichtung ausführbar ist.

Zwischen dem X-Antrieb 18, dem Y-Antrieb 17 und der Rotationseinrichtung 16 und dem Wafer 2 ist eine Aufnahme 14 fixiert, die wiederum über Ansaugbahnen 13 verfügt. An den Ansaugbahnen 13 ist der Wafer 2 an seiner der Prägeseite 2o gegenüberliegenden Aufnahmeseite 2a fixierbar.

Der Stempel 1 weist im Bereich des Umfangsrandes 1u äußere Ausrichtungsmarken 4 auf, die in Bezug auf äußere korrespondierende Ausrichtungsmarken 6 des Wafers 2 ausrichtbar sind. Die äußeren Ausrichtungsmarken 4, 6 sind insbesondere seitlich außerhalb der Prägestrukturen 21 beziehungsweise der Linsenformen 8 angeordnet, vorzugsweise zu keinem Zeitpunkt des Prägeprozesses, insbesondere der Formung, von einem die Linsenmatrix 25 bildenden Linsenmaterial in Form eines aushärtbaren Fluids 3 bedeckt. Die äußeren Ausrichtungsmarken 4, 6 können beispielsweise zu einer Grobausrichtung des Stempels 1 gegenüber dem Wafer 2 dienen.

Weiterhin besitzt der Stempel 1 innere Ausrichtungsmarken 5, welche zu korrespondierenden inneren Ausrichtungsmarken 7 des Wafers 2 ausrichtbar sind. Die inneren Ausrichtungsmarken 5, 7 sind außerhalb beziehungsweise zwischen den Linsenformen 8, insbesondere translationssymmetrisch auf dem Stempel 1 beziehungsweise dem Wafer 2 angeordnet. Während des Prägeprozesses beziehungsweise während der Formung sind die Ausrichtungsmarken 5, 7 zumindest gegen Ende des Prägeprozesses beziehungsweise der Formung mit dem Linsenmaterial beziehungsweise dem aushärtbaren Fluid 3 bedeckt.

Die Vorrichtung weist außerdem Aufbringmittel zur Aufbringung des aushärtbaren Fluids 3, insbesondere Polymers, in fluider Form auf die Prägeseite 1o und/oder die Prägeseite 2o auf, die nicht dargestellt sind. Die Aufbringmittel können beispielsweise aus einer in den Zwischenraum zwischen dem Stempel 1 und dem Wafer 2 einbringbaren Dosierleitung bestehen.

Durch die einzeln ansteuerbaren Aktoren 19 ist ein Keilfehlerausgleich ausführbar, indem durch die Positonserfassungsmittel 22, 23 die Relativposition der Ausrichtungsmarken 4, 5, 6, 7 zueinander erfasst wird und ein etwaiger vorhandener Keilfehler entsprechend korrigiert wird.

Ebenso erfolgt eine X-Y-Ausrichtung durch den X-Antrieb 18 und den Y-Antrieb 17 sowie die Rotationseinrichtung 16.

Eine Aufeinander-zu-Bewegung des Stempels 1 und des Wafers 2 erfolgt durch die in Z-Richtung bewegbaren Aktoren 19 und während des Aufeinander-zu-Bewegens erfolgt die Formung des aushärtbaren Fluids.

Die Prägemittel umfassen weiterhin neben den für die Formung vorgesehenen Merkmalen Aushärtemittel zur Aushärtung des aushärtbaren Fluids 3, die von der Steuereinrichtung angesteuert werden, sobald die Formung des Linsenwafers 25 abgeschlossen ist.

Die Positionserfassungsmittel 22, 23 sind auf der zur Prägeseite 1o abgewandten Seite der Aufnahme 11 angeordnet und die Positionserfassung erfolgt durch die für elektromagnetische Strahlung, insbesondere sichtbares oder UV-Licht, durchlässige Aufnahme und Stempel 1 hindurch. Erfindungsgemäß ist es von besonderem Vorteil, wenn die Positionserfassungsmittel mit einer Schärfentiefe kleiner 100 µm, insbesondere kleiner 50 µm, vorzugsweise kleiner 25 µm einsetzbar sind.

Der Wafer 2 ist im allgemeinen transparent für eine entsprechende elektromagnetische Strahlung. Der Wafer 2 kann nicht transparent sein, wenn das Endprodukt keine Transmissionslinsen sondern nur Reflektionslinsen sind.

In dem in Figur 2a gezeigten Verfahrensschritt ist aushärtbares Fluid 3 auf den Wafer 2 zentrisch aufgetragen, und zwar durch nicht dargestellte, oben beschriebene Aufbringmittel zur Aufbringung des aushärtbaren Fluids 3 auf dem Wafer 2.

Anschließend wird gemäß Figur 2b und mittels der Aktoren 19 der Wafer 2 auf den starren Stempel 1 zu bewegt und während des Aufeinander-zu-Bewegens erfolgt die Formung des aushärtbaren Fluids 3, indem das aushärtbare Fluid 3 sich vom Zentrum des Wafers 2 in Richtung des Umfangsrandes 1 u beziehungsweise Umfangsrandes 2u bewegt.

Sobald die Formung gemäß Figur 2c abgeschlossen ist, wird die Bewegung in Z-Richtung durch die Steuereinrichtung gestoppt. Als Steuergröße dient beispielsweise ein Abstand D zwischen der Prägeseite 1o und der Prägeseite 2o.

Bis zum Erreichen des voreingestellten Abstands D und innerhalb des Schärfentiefebereichs der Positionserfassungsmittel kann laufend während des Aufeinander-zu-Bewegens, also während der Formung des aushärtbaren Fluids 3, ein Keilfehlerausgleich durch die Keilfehlerausgleichsmittel und/oder eine X-Y-Ausrichtung durch die X-Y-Ausrichtungsmittel erfolgen, so dass bei Erreichen des voreingestellten Abstands D der Stempel 1 gegenüber dem Wafer 2 exakt und ohne Keilfehler ausgerichtet ist. Die korrespondierenden Ausrichtungsmarken 4, 5, 6 und 7 weisen zu diesem Zeitpunkt alle exakt den gleichen Abstand auf und da die Ausrichtungsmarken 4, 5, 6, 7 jeweils bündig an der Prägeseite 1o beziehungsweise 2o angeordnet sind, entspricht der Abstand der Ausrichtungsmarken 4, 5, 6, 7 dem voreingestellten Abstand D.

Gemäß einer bevorzugten Ausführung erfolgt die Ausrichtung nur innerhalb der Schärfentiefe, vorzugsweise bei oder nach erreichen des voreingestellten Abstands D.

Der Keilfehlerausgleich und die X-Y-Ausrichtung erfolgen vorzugsweise zumindest während der Abstand D kleiner 100 µm, insbesondere kleiner 50 µm, vorzugsweise kleiner 25 µm beträgt.

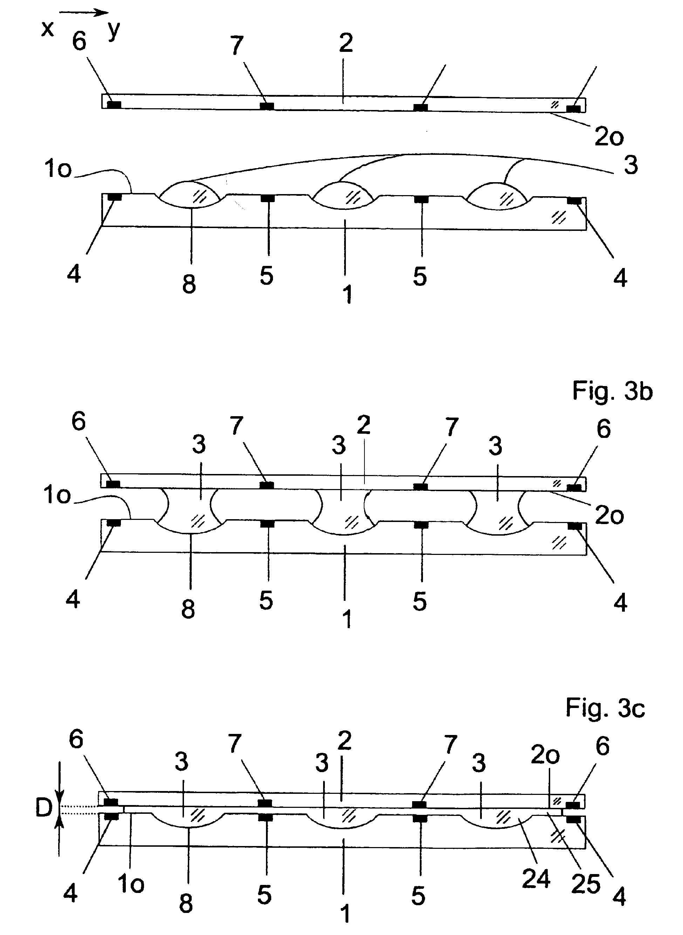

In der Ausführungsform des Verfahrens gemäß Figuren 3a bis 3c ist die Vorrichtung gemäß Figur 1 quasi umgekehrt, so dass der Wafer 2 oberhalb des Stempels 1 angeordnet ist und bei dieser Ausführungsform wird der Stempel 1 auf den Wafer 2 zu bewegt, während der Wafer 2 starr bleibt.

Die Positionserfassungsmittel sind in diesem Fall unterhalb des Stempels 1 angeordnet. Das aushärtbare Fluid 3 wird durch Tropfenabscheidung in/auf die Linsenformen 8 aufgebracht. Im Falle konkaver Linsenformen 8 wird das aushärtbare Fluid 3 durch die Schwerkraft und die Vertiefung automatisch in einer stabilen Lage gehalten. Bei einer konvexen Linsenform verfügt das aushärtbare Fluid über eine genügend hohe Viskosität, um das Polymer auf dem Stempel beziehungsweise auf der Linsenform 8 zu stabilisieren.

Durch die Annäherung des Stempels 1 und des Wafers 2 wird das aushärtbare Fluid 3 mit der Prägeseite 2o des Wafers 2 in Kontakt kommen. Abhängig von der Menge des aushärtbaren Fluids 3, dem Abstand der Linsenformen 8 zueinander sowie den Umgebungsbedingungen können die inneren Ausrichtungsmarken 5, 7 durch das aushärtbare Fluid 3, Luft, Gas, insbesondere Inertgas, vorzugsweise Stickstoff oder Vakuum getrennt sein.

Gemäß einer Abwandlung der Ausführungsform gemäß Figuren 3a bis 3c wird der Stempel 1 oben angeordnet und der Wafer 2 unten, wobei das aushärtbare Fluid 3 auch in diesem Fall auf den Stempel 1 aufbringbar ist, da auf Grund der Adhäsionskräfte zwischen dem aushärtbaren Fluid 3 und dem Stempel ein Haften des aushärtbaren Fluids 3 am Stempel 1 realisierbar ist.

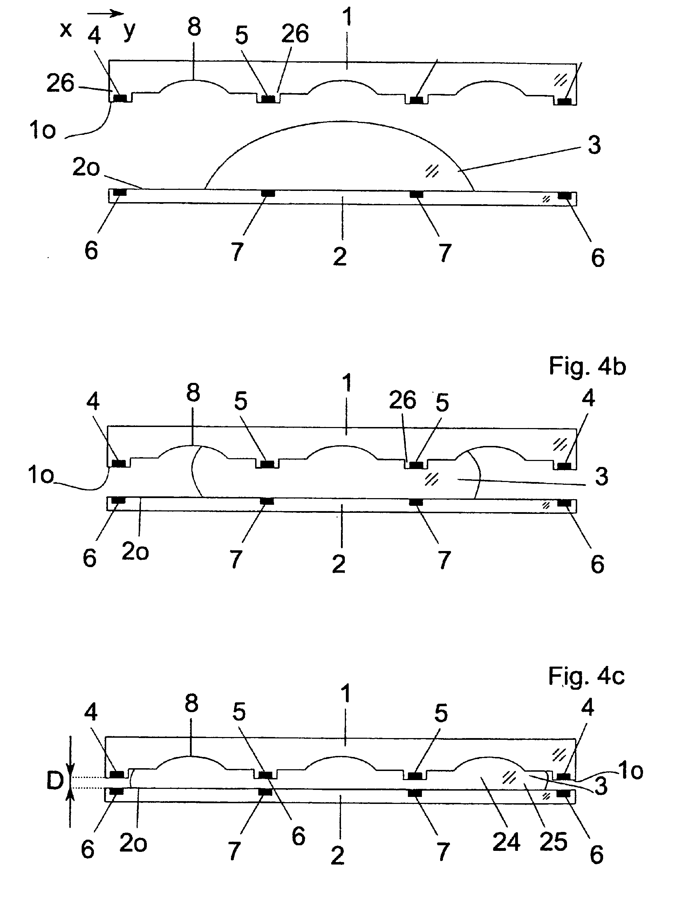

Gemäß einer weiteren, in Figuren 4a bis 4c dargestellten Ausführungsformen der Erfindung ist im Unterschied zu der Ausführungsform gemäß Figuren 2a bis 2c vorgesehen, dass der Stempel 1 Vorsprünge 26 aufweist. Die Vorsprünge 26 überragen die Prägeseite 1o und in den Vorsprüngen 26 sind die Ausrichtungsmarken 4, 5 angeordnet, so dass die Ausführungsmarken 4, 5 beim Formen des Linsenwafers näher an den korrespondierenden Ausrichtungsmarken 6, 7 anordnenbar sind. Die Folge ist eine noch genauere Ausrichtung bei vorgegebener Dicke oder Höhe der Mikrolinsen 24.

Im übrigen entspricht das Verfahren gemäß Figuren 4a bis 4c dem Verfahren gemäß Figuren 2a bis 2c.

Die Aushärtung des aushärtbaren Fluids 3 erfolgt durch Bestrahlungsmittel zur Erzeugung von elektromagnetischer Strahlung, insbesondere in Form mindestens einer Lampe 27, vorzugsweise UV-Lampe, die oberhalb oder innerhalb der Aufnahme 11 angeordnet sind.

### Bezugszeichenliste

- 1: Stempel
- 1 a: Aufnahmeseite
- 1o: Prägeseite
- 1u: Umfangsrand
- 2: Wafer
- 2a: Aufnahmeseite
- 2o: Prägeseite
- 2u: Umfangsrand
- 3: Aushärtbares Fluid
- 4: Ausrichtungsmarken
- 5: Ausrichtungsmarken
- 6: Ausrichtungsmarken
- 7: Ausrichtungsmarken
- 8: Linsenformen
- 9: Halterung
- 9u: Umfangsschalter
- 9i: Ringwand
- 10: Ansaugbahnen
- 11: Aufnahme
- 13: Ansaugbahnen
- 14: Aufnahme
- 16: Rotationseinrichtung
- 17: Y-Antrieb
- 18: X-Antrieb
- 19: Aktoren
- 21: Prägestruktur
- 22: Mikroskop
- 23: Mikroskop
- 24: Mikrolinsen
- 25: Linsenmatrix
- 26: Vorsprünge
- 27: Lampe
- D: Abstand
- Z: Z-Richtung
- Y: Y-Richtung
- X: X-Richtung

## Patentansprüche

1. Verfahren zur Herstellung eines eine Vielzahl von Mikrolinsen aufweisenden, aus einem Linsenmaterial und einem Wafer (2) bestehenden Linsenwafers mit folgenden Schritten, insbesondere mit folgendem Ablauf:
- Aufbringung des Linsenmaterials, insbesondere eines aushärtbaren Fluids (3), vorzugsweise Polymers, in fluider Form auf eine Prägeseite (2o) des Wafers (2) und/oder auf eine Linsenformen (8) zum Prägen der Mikrolinsen aufweisende Prägeseite (1o) eines Stempels (1),
- Aufeinander-zu-Bewegung des im Wesentlichen parallel, nämlich in einer X-Y-Ebene, und gegenüberliegend zum Wafer (2) angeordneten Stempels (1) in einer senkrecht zur X-Y-Ebene verlaufenden Z-Richtung,
- Prägen des Linsenwafers durch Formung und anschließende Aushärtung des Linsenmaterials, wobei die Formung durch Aufeinander-zu-Bewegung der Stempel (1, 2) erfolgt,
**dadurch gekennzeichnet, dass** ein Keilfehlerausgleich durch Keilfehlerausgleichsmittel (19) zur parallelen Ausrichtung der Prägeseiten (1o, 2o) und/oder eine X-Y-Ausrichtung des Stempels (1) mit dem Wafer (2) während der Formung erfolgen.

2. Verfahren nach Anspruch 1, bei dem der Keilfehlerausgleich und/oder die X-Y-Ausrichtung nach Unterschreiten eines Abstands D zwischen der Prägeseite (1o) und der Prägeseite (2o), insbesondere laufend, erfolgen.

3. Verfahren nach Anspruch 1 oder 2, bei dem die Formung positionsgeregelt erfolgt.

4. Verfahren nach einem der vorhergehenden Ansprüche, bei dem zum Keilfehlerausgleich und/oder zur X-Y-Ausrichtung im Stempel (1), insbesondere an der Prägeseite (1o), vorzugsweise zumindest an einem Umfangsrand (1u) des Stempels (1), und im Wafer (2), insbesondere an der Prägeseite (2o), vorzugsweise zumindest an einem Umfangsrand (2u) des Wafers (2), jeweils korrespondierende Ausrichtungsmarken (4, 5, 6, 7) vorgesehen sind.

5. Verfahren nach einem der vorhergehenden Ansprüche, bei dem der Keilfehlerausgleich und/oder die X-Y-Ausrichtung erfolgen, nachdem sowohl die Prägeseite (1o) als auch die Prägeseite (2o) zumindest teilweise, vorzugsweise überwiegend, von dem Fluid (3) bedeckt sind.

6. Verfahren nach einem der vorhergehenden Ansprüche, bei dem zum Keilfehlerausgleich und/oder zur X-Y-Ausrichtung optische Positionserfassungsmittel, insbesondere Optiken, vorgesehen sind, wobei während des Keilfehlerausgleichs und/oder der X-Y-Ausrichtung sowohl die Prägeseite (1o) oder deren Ausrichtungsmarken (4, 5) als auch die Prägeseite (2o) oder deren Ausrichtungsmarken (6, 7), insbesondere gleichzeitig, im Schärfentiefebereich der, insbesondere zum Wafer (2) starren, optischen Positionserfassungsmittel () angeordnet sind.

7. Verfahren nach Anspruch 6, bei dem ein Abstand D zwischen der Prägeseite (1o) und der Prägeseite (2o) in Z-Richtung während der Positionserfassung größer als 0 und gleichzeitig kleiner als der Schärfentiefebereich in Z-Richtung ist.

8. Vorrichtung zur Herstellung eines eine Vielzahl von Mikrolinsen aufweisenden Linsenwafers mit:
- einem Stempel (1) mit einer Prägeseite (1o) mit einer Linsenformen (8) aufweisenden Prägestruktur (21),
- einer ersten Aufnahmeeinrichtung zur Aufnahme des Stempels (1) an einer von der Prägeseite (1o) abgewandten Aufnahmeseite (1a),
- einer zweiten Aufnahmeeinrichtung zur Aufnahme eines Wafers (2) an dessen von seiner Prägeseite (2o) abgewandten Aufnahmeseite (2a),
- Aufbringmitteln zur Aufbringung eines aushärtbaren Fluids (3), insbesondere Polymers, in fluider Form auf die Prägeseite (1o) oder die Prägeseite (2o),
- Keilfehlerausgleichsmitteln (19) und/oder X-Y-Ausrichtungsmitteln,
- Prägemitteln zum Prägen des Linsenwafers durch Formung und Aushärtung des aushärtbaren Fluids (3), **gekennzeichnet dadurch, dass**
der Wafer (2) während der Formung durch die Keilfehlerausgleichsmittel und/oder die X-Y-Ausrichtungsmittel gegenüber dem Stempel (1) ausrichtbar ist.

9. Vorrichtung nach Anspruch 8, bei der zum Keilfehlerausgleich und/oder zur X-Y-Ausrichtung im Stempel (1), insbesondere an der Prägeseite (1o), vorzugsweise zumindest an einem Umfangsrand (1 u) des Stempels (1), Ausrichtungsmarken (4, 5) vorgesehen sind, die zu Ausrichtungsmarken (6, 7) des Wafers (2) korrespondierend angeordnet sind.

10. Vorrichtung nach Anspruch 8 oder 9, bei der zum Keilfehlerausgleich und/oder zur X-Y-Ausrichtung optische Positionserfassungsmittel, insbesondere Optiken, vorgesehen sind, wobei während des Keilfehlerausgleichs und/oder der X-Y-Ausrichtung sowohl die Prägeseite (1o) oder deren Ausrichtungsmarken (4, 5) als auch die Prägeseite (2o) oder deren Ausrichtungsmarken (6, 7), insbesondere gleichzeitig, im Schärfentiefebereich der, insbesondere zum Wafer (2) starren, optischen Positionserfassungsmittel anordenbar sind.

## Claims

1. Method for producing a lens wafer which has a plurality of microlenses and which consists of a lens material and a wafer (2), with the following steps, especially with the following sequence:
- application of the lens material, especially of a curable fluid (3), preferably a polymer, in fluid form to one stamping side (2o) of the wafer (2) and/or to one stamping side (1o) of a die (1), which side has lens molds (8) for stamping of the microlenses,
- movement of the die (1) which is located essentially parallel, specifically in an X-Y plane, and oppositely to the wafer (2), together in a Z-direction which runs perpendicular to the X-Y plane,
- stamping of the lens wafer by shaping and subsequent curing of the lens material, the shaping taking place by moving the dies (1, 2) together,
**characterized in that** wedge faults equalization takes place by wedge fault equalization means (19) for parallel alignment of the stamping sides (1o, 2o) and/or an X-Y alignment of the die (1) with the wafer (2) during shaping.

2. Method as claimed in Claim I, wherein the wedge fault equalization and/or the X-Y alignment takes place especially continuously after a distance D between the stamping side (1o) and the stamping side (2o) is no longer reached.

3. Method as claimed in Claim I or 2, wherein shaping takes place position-controlled.

4. Method as claimed in Claim 1 or 2, wherein there are corresponding alignment marks (4, 5, 6, 7) for wedge fault equalization and/or for X-Y alignment in the die (1), especially on the stamping side (1o), preferably at least on one peripheral edge (1u) of the die (1), and in the wafer (2), especially on the stamping side (2o), preferably at least on one peripheral edge (2u) of the wafer (2).

5. Method as claimed in Claim 1 or 2, wherein the wedge fault equalization and/or X-Y alignment take place since both the stamping side (1o) and also the stamping side (2o) are at least partially, preferably predominantly, covered by the fluid (3).

6. Method as claimed in Claim 1 or 2, wherein there are optical position detection means, especially optics, for wedge fault equalization and/or for X-Y alignment, during the wedge fault equalization and/or the X-Y alignment both the stamping side (1o) or its alignment marks (4, 5) and also the stamping side (2o) or its alignment marks (6,7) being located, especially at the same time, in the depth of field region of the optical position detection means () which are rigid especially to the wafer (2).

7. Method as claimed in Claim 6, wherein a distance D between the stamping side (1o) and the stamping side (2o) in the Z direction is greater than 0 and at the same time smaller than the depth of field region in the Z-direction.

8. Device for producing a lens wafer which has a plurality of microlenses with:
- a die (1) with one stamping side (1o) with a stamping structure (21) which has lens molds (8),
- a first receiving means for accommodating the die (1) on one receiving side (1a) which faces away from the stamping side (1o),
- a second receiving means for accommodating a wafer (2) on its receiving side (2a) which faces away from its stamping side (2o),
- application means for application of a curable fluid (3), especially a polymer, in fluid form to the stamping side (1o) or the stamping side (2o),
- wedge fault equalization means (19) and/or X-Y alignment means,
- stamping means for stamping of a lens wafer by shaping and curing of the curable fluid (3), and
the wafer (2) during shaping can be aligned relative to the die (1) by the wedge fault equalization means and/or the X-Y alignment means.

9. Device as claimed in Claim 8, wherein for wedge fault equalization and/or for X-Y alignment in the die (1), especially on the stamping side (1o), preferably at least on one peripheral edge (1u) of the die (1), there are alignment marks (4, 5) which are arranged corresponding to alignment marks (6, 7) of the wafer (2).

10. Device as claimed in Claim 8 or 9, wherein there are optical position detection means, especially optics, for wedge fault equalization and/or for X-Y alignment, during the wedge fault equalization and/or the X-Y alignment both the stamping side (1o) or its alignment marks (4, 5) and also the stamping side (2o) or its alignment marks (6, 7) being located, especially at the same time, in the depth of field region of the optical position detection means which are rigid especially to the wafer (2).

## Revendications

1. Procédé de fabrication d'une plaquette de lentilles présentant une pluralité de micro-lentilles, composée d'un matériau de lentille et d'une plaquette (2), comprenant les étapes suivantes, en particulier le déroulement suivant :
- application du matériau de lentille, en particulier d'un fluide durcissable (3), de préférence un polymère, sous forme fluidique sur une face de matriçage (2o) de la plaquette (2) et/ou sur une face de matriçage (1o) d'un poinçon (1) présentant un moule de lentille (8) pour matricer les micro-lentilles,
- le mouvement de rapprochement-superposition du poinçon (1) essentiellement parallèle, c'est à dire dans un plan x - Y et disposé en face de la plaquette (2), dans un sens Z vertical au plan X - Y,
- le matriçage de la plaquette de lentilles par la conformation et le durcissement consécutif du matériau de lentille, sachant que la conformation a lieu par rapprochement-superposition des poinçons (1, 2),
**caractérisé en ce qu'**une compensation de l'erreur de coin est effectuée par des moyens de compensation de l'erreur de coin (19) pour l'alignement parallèle des faces de matriçage (1o, 2o), et/ou un alignement X - Y du poinçon (1) avec la plaquette (2) est /sont effectué(s) pendant la conformation.

2. Procédé selon la revendication 1, dans lequel la compensation de l'erreur de coin et/ou l'alignement X - Y a/ont lieu après dépassement de la limite inférieure d'une distance D entre la face de matriçage (1o) et la face de matriçage (2o), en particulier en continu.

3. Procédé selon la revendication 1 ou 2, dans lequel la conformation s'effectue en position réglée.

4. Procédé selon l'une des revendications précédentes, dans lequel des repères d'alignement (4, 5, 6, 7) correspondants respectifs sont prévus pour la compensation de l'erreur de coin et/ou l'alignement x - Y dans le poinçon (1), en particulier sur la face de matriçage (1o), de préférence au moins sur une bord périphérique (1u) du poinçon (1), et dans la plaquette (2), en particulier sur la face de matriçage (2o), de préférence au moins sur un bord périphérique (2u) de la plaquette (2).

5. Procédé selon l'une des revendications précédentes, dans lequel la compensation de l'erreur de coin et/ou l'alignement X - Y a/ont lieu après que, tant la face de matriçage (1o) que la face de matriçage (2o), sont couvertes par le fluide (3), au moins partiellement et de préférence en majorité.

6. Procédé selon l'une des revendications précédentes, dans lequel des moyens optiques d'enregistrement de la position, en particulier des optiques, sont prévus pour la compensation de l'erreur de coin et/ou l'alignement X - Y, sachant que pendant la compensation de l'erreur de coin et/ou l'alignement X - Y, tant la face de matriçage (1o) ou ses repères d'alignement (4, 5), que la face de matriçage (2o) ou ses repères d'alignement (6, 7), sont disposé(e)s en particulier simultanément dans la partie de profondeur de champ des moyens optiques d'enregistrement de la position qui sont en particulier fixes par rapport à la plaquette (2).

7. Procédé selon la revendication 6, dans lequel une distance D entre la face de matriçage (1o) et la face de matriçage (2o) dans le sens Z est supérieure à 0 pendant l'enregistrement de la position et simultanément inférieure à la profondeur de champ dans le sens z.

8. Dispositif de fabrication d'une plaquette de lentilles présentant une pluralité de micro-lentilles comprenant :
- un poinçon (1) ayant une face de matriçage (1o) avec une structure de matriçage (21) présentant un moule de lentille (8),
- un premier dispositif de réception pour recevoir le poinçon (1) sur un côté de réception (1a) détourné de la face de matriçage (1o),
- un second dispositif de réception pour recevoir une plaquette (2) sur son côté de réception (2a) détourné de sa face de matriçage (2o),
- des moyens d'application pour appliquer un fluide durcissable (3), en particulier un polymère, sous forme fluidique sur la face de matriçage (1o) ou la face de matriçage (2o),
- des moyens de compensation de l'erreur de coin (19) et/ou d'alignement X - Y,
- des moyens de matriçage pour matricer la plaquette de lentilles par conformation et durcissement du fluide durcissable (3), **caractérisé en ce que**
la plaquette (2) peut être alignée par rapport au poinçon (1) par les moyens de compensation de l'erreur de coin (19) et/ou d'alignement X - Y, pendant la conformation.

9. Dispositif selon la revendication 8, dans lequel des repères d'alignement (4, 5) sont prévus pour la compensation de l'erreur de coin et/ou l'alignement X - Y dans le poinçon (1), en particulier sur la face de matriçage (1o), de préférence au moins sur un bord périphérique (1u) du poinçon (1), lesquels sont disposés en correspondance avec des repères d'alignement (6, 7) de la plaquette (2).

10. Dispositif selon la revendication 8 ou 9, dans lequel des moyens optiques d'enregistrement de la position, en particulier des optiques, sont prévus pour la compensation de l'erreur de coin et/ou l'alignement X - Y, sachant que pendant la compensation de l'erreur de coin et/ou l'alignement x - Y, tant la face de matriçage (1o) ou ses repères d'alignement (4, 5), que la face de matriçage (2o) ou ses repères d'alignement (6, 7), peuvent être disposé(e)s en particulier simultanément dans la partie de profondeur de champ des moyens optiques d'enregistrement de la position qui sont en particulier fixes par rapport à la plaquette (2).
